# FASCICULE DE BREVET EUROPEEN

(11) **EP 3 428 010 B1**
(45) Date de publication et mention de la délivrance du brevet: **24.11.2021**
(21) Numéro de dépôt: 18182885.6
(22) Date de dépôt: 11.07.2018
(51) Int. Cl.: B60N 3/06, A63B 21/008, A63B 21/02, A63B 22/00, B64D 11/06

(54) **SYSTEME DE STIMULATION, SIEGE DE VEHICULE ET VEHICULE ASSOCIES**
STIMULATIONSSYSTEM, ENTSPRECHENDER FAHRZEUGSITZ UND ENTSPRECHENDES FAHRZEUG
STIMULATION SYSTEM, ASSOCIATED VEHICLE SEAT AND VEHICLE

(30) Priorité: 11.07.2017 FR 1756583
(43) Date de publication de la demande: 16.01.2019
(73) Titulaire: Pga Electronic, 36130 Montierchaume (FR)
(72) Inventeur: PALACIO, Bruno, 36130 MONTIERCHAUME (FR)
(74) Mandataire: Brevalex

(56) Documents cités:
- WO-A1-2016/032026
- GB-A- 2 404 346
- JP-A- 2006 167 094
- US-A- 4 376 532
- US-A1- 2006 030 795

## Description

### DOMAINE TECHNIQUE

La présente invention concerne un système de stimulation des membres inférieurs d'un passager d'un véhicule.

L'invention concerne également un siège de véhicule équipé d'un tel système de stimulation, et un véhicule embarquant un tel système de stimulation.

L'invention s'applique au domaine du transport de personnes, et plus particulièrement au domaine du transport aérien de personnes.

### ÉTAT DE LA TECHNIQUE ANTÉRIEURE

Dans les transports actuels, tels que le bus, le train ou l'avion, les passagers sont généralement contraints de rester assis. En outre, l'espace disponible pour permettre aux passagers de mouvoir leurs membres inférieurs est généralement restreint. Dans de telles circonstances, les passagers sont susceptibles de ressentir des engourdissements dus à l'inaction musculaire et l'appauvrissement de la circulation sanguine dans les membres inférieurs qui résultent de la station assise prolongée.

Il est connu d'équiper un véhicule, au niveau de la partie inférieure d'un siège, d'un dispositif comprenant des leviers, similaires à des pédales d'accélérateur ou d'embrayage de voiture, ou encore à des dispositifs de type « steppers » d'exercice physique, destinés à être actionnés par un passager avec ses pieds, et ce dans le but de proposer aux passagers un moyen d'exercer leurs membres inférieurs. Un tel dispositif est décrit dans le document GB2404346A.

Néanmoins, un tel dispositif ne donne pas entière satisfaction.

En effet, un tel dispositif de l'état de la technique ne présente pas une géométrie favorable à une intégration dans un véhicule de transport collectif de passagers. Ceci est notamment dû au fait qu'un tel dispositif s'étend principalement dans une direction longitudinale par rapport au siège auquel le dispositif est fixé, c'est-à-dire vers l'avant du siège. Or, dans un transport collectif de passagers, l'espacement entre les sièges est réduit. En outre, pour des raisons de sécurité, il est nécessaire de maintenir un espace minimal de dégagement libre entre les sièges.

Un but de l'invention est donc de proposer un système de stimulation propre à conduire à une activation des muscles des membres inférieurs du passager lorsque le passager actionne un tel système de stimulation, et à entraîner une meilleure atténuation de l'engourdissement engendré par une station assise prolongée, tout en présentant un encombrement réduit par rapport aux dispositifs de l'état de la technique.

### EXPOSÉ DE L'INVENTION

A cet effet, l'invention a pour objet un siège de véhicule destiné à recevoir un passager, le siège étant équipé d'un système de stimulation des membres inférieurs du passager, le système de stimulation comportant un support et un dispositif d'appui,
le dispositif d'appui comprenant un premier organe d'appui et un deuxième organe d'appui,
le premier organe d'appui et le deuxième organe d'appui étant disposés de part et d'autre d'un plan médian, le plan médian étant destiné à se superposer à un plan de symétrie du siège, chacun parmi le premier organe d'appui et le deuxième organe d'appui étant destiné à recevoir au moins en partie un pied du passager,
chacun du premier organe d'appui et du deuxième organe d'appui étant monté pivotant, par rapport au support, autour d'un axe de rotation correspondant,
chaque axe de rotation formant, avec le plan médian, un angle inférieur ou égal à 45°,
le système de stimulation comportant, en outre, un dispositif d'amortissement du mouvement d'au moins un parmi le premier organe d'appui et le deuxième organe d'appui par rapport au support,
le système de stimulation étant fixé à un repose-pied du siège, à des parties basses du siège ou à des pieds du siège,
le système de stimulation étant destiné à être actionné par le passager lorsque le passager se trouve en position assise sur le siège.

En effet, grâce à un siège comportant un tel système de stimulation, le passager est susceptible d'actionner le dispositif d'appui pour entraîner le basculement du dispositif d'appui de la droite vers la gauche et inversement, du fait de l'orientation de chaque axe de rotation, ce qui a pour effet de simuler la marche. Une telle simulation de la marche entraîne une bonne mobilisation des muscles des membres inférieurs, ce qui a pour effet de réduire l'engourdissement et les fourmillements ressentis par le passager du fait de la station assise prolongée.

En outre, dans un tel système de stimulation, du fait de l'orientation de chaque axe de rotation par rapport au plan médian, le dispositif d'appui s'étend principalement dans une direction transversale. Ainsi, l'encombrement dans la direction longitudinale, c'est-à-dire par rapport à l'espace devant le siège, est réduit en comparaison avec les dispositifs de l'état de la technique. Par conséquent, grâce à un tel système, il est plus facile de maintenir l'espace minimal de dégagement libre entre les sièges qui est requis pour une circulation aisée entre les sièges et pour une évacuation d'urgence sans entrave selon des considérations de sécurité.

Suivant d'autres aspects avantageux de l'invention, le siège comporte une ou plusieurs des caractéristiques suivantes, prise(s) isolément ou suivant toutes les combinaisons techniquement possibles :
- l'axe de rotation associé au premier organe d'appui et l'axe de rotation associé au deuxième organe d'appui sont confondus ;
- le premier organe d'appui et le deuxième organe d'appui sont solidaires l'un de l'autre ;
- l'axe de rotation associé au premier organe d'appui et l'axe de rotation associé au deuxième organe d'appui sont distincts, chacun parmi le premier organe d'appui et le deuxième organe d'appui étant susceptible d'être mis en mouvement de façon indépendante autour de l'axe de rotation correspondant, le dispositif d'amortissement étant en outre configuré pour ramener le premier organe d'appui et/ou le deuxième organe d'appui vers une position de référence correspondante ;
- le système de stimulation comporte, en outre, au moins un transducteur électromécanique propre à convertir au moins une partie de l'énergie mécanique associée au déplacement de l'au moins un parmi le premier organe d'appui et le deuxième organe d'appui en une énergie électrique ;
- le système de stimulation comporte, en outre, un afficheur, l'afficheur étant configuré pour afficher des données relatives à l'actionnement du système de stimulation, l'afficheur étant préférentiellement alimenté par le transducteur électromécanique, les données relatives à l'actionnement du système de stimulation étant, de préférence, issues d'un signal électrique généré par le transducteur électromécanique ;
- le système de stimulation comporte, en outre, une prise de recharge pour appareil nomade, la prise étant alimentée en énergie électrique par le transducteur électromécanique, au travers d'un organe électronique intégrant des fonctions de redressement de courant électrique, de régulation de courant électrique et, de préférence, de protection électrique ;
- le dispositif d'amortissement comporte des organes de sollicitation élastiques configurés pour engendrer des efforts de réaction lors de l'écart du premier organe d'appui et/ou du deuxième organe d'appui d'une position de référence correspondante afin de ramener le premier organe d'appui et/ou le deuxième organe d'appui vers la position de référence ;
- le dispositif d'amortissement comporte un premier ballonnet et un deuxième ballonnet, le premier ballonnet étant agencé en regard d'une face inférieure du premier organe d'appui pour être comprimé lors d'un déplacement du premier organe d'appui vers le premier ballonnet, et le deuxième ballonnet étant agencé en regard d'une face inférieure du deuxième organe d'appui pour être comprimé lors d'un déplacement du deuxième organe d'appui vers le deuxième ballonnet, le premier ballonnet et le deuxième ballonnet étant relié entre eux par un canal de communication fluidique pour former une enceinte étanche remplie de fluide ;
- chaque axe de rotation forme un angle nul avec le plan médian.

Suivant un autre aspect avantageux de l'invention, un tel siège est un siège destiné à être embarqué à bord d'un bus, d'une voiture, d'un train, ou encore d'un aéronef.

En outre, l'invention a pour objet un véhicule comprenant au moins un siège tel que défini ci-dessus.

Suivant un autre aspect avantageux de l'invention, un tel véhicule est un bus, une voiture, un train, ou encore un aéronef.

En outre, l'invention a pour objet un véhicule comprenant au moins un système de stimulation des membres inférieurs d'un passager du véhicule,
le système de stimulation comportant un support et un dispositif d'appui,
le dispositif d'appui comprenant un premier organe d'appui et un deuxième organe d'appui,
le premier organe d'appui et le deuxième organe d'appui étant disposés de part et d'autre d'un plan médian, le plan médian étant destiné à se superposer à un plan de symétrie d'un siège propre à recevoir le passager, chacun parmi le premier organe d'appui et le deuxième organe d'appui étant destiné à recevoir au moins en partie un pied du passager,
chacun du premier organe d'appui et du deuxième organe d'appui étant monté pivotant, par rapport au support, autour d'un axe de rotation correspondant,
chaque axe de rotation formant, avec le plan médian, un angle inférieur ou égal à 45°,
chaque système de stimulation comportant, en outre, un dispositif d'amortissement du mouvement d'au moins un parmi le premier organe d'appui et le deuxième organe d'appui par rapport au support,
chaque système de stimulation étant fixé à un plancher du véhicule, en regard d'une partie basse d'un siège correspondant,
chaque système de stimulation étant destiné à être actionné par un passager lorsque le passager se trouve en position assise sur le siège correspondant.

Suivant un autre aspect avantageux de l'invention, un tel véhicule est un bus, une voiture, un train, ou encore un aéronef.

### BRÈVE DESCRIPTION DES DESSINS

L'invention sera mieux comprise à l'aide de la description qui va suivre, donnée uniquement à titre d'exemple non limitatif et faite en se référant aux dessins annexés sur lesquels :
- les figures 1A à 1C illustrent différents agencements d'un système de stimulation selon l'invention, par rapport à un siège de véhicule ;
- la figure 2 est une vue de face d'un premier mode de réalisation d'un système de stimulation selon l'invention ;
- la figure 3 est une vue de face d'une variante du système de stimulation de la figure 2 ;
- la figure 4 est une vue de face d'une autre variante du système de stimulation de la figure 2 ;
- la figure 5 est une vue de face d'une autre variante du système de stimulation de la figure 2 ;
- la figure 6 est une vue de face d'un deuxième mode de réalisation d'un système de stimulation selon l'invention ;
- la figure 7 est une vue de face d'un troisième mode de réalisation d'un système de stimulation selon l'invention ;
- la figure 8 est une vue de dessus en coupe du système de stimulation de la figure 7 ;
- la figure 9 est une vue de face d'un quatrième mode de réalisation d'un système de stimulation selon l'invention ; et
- la figure 10 est une vue de face d'une variante du système de stimulation de la figure 9.

### EXPOSÉ DÉTAILLÉ DE MODES DE RÉALISATION PARTICULIERS

Un véhicule (non représenté) est équipé d'un système de stimulation 2 selon l'invention.

Le système de stimulation 2 est destiné à la stimulation des membres inférieurs 4 d'un passager 6 du véhicule. En particulier, le système de stimulation 2 est destiné à la stimulation des membres inférieurs 4 du passager 6 par l'action du passager 6 sur le système de stimulation 2au moyen de ses pieds 8. Plus précisément, le système de stimulation 2 est destiné à simuler la marche chez le passager 6, en particulier lorsque le passager 6 se trouve en position assise.

Plus précisément, le véhicule est équipé du dispositif de stimulation 2 au niveau de ses sièges.

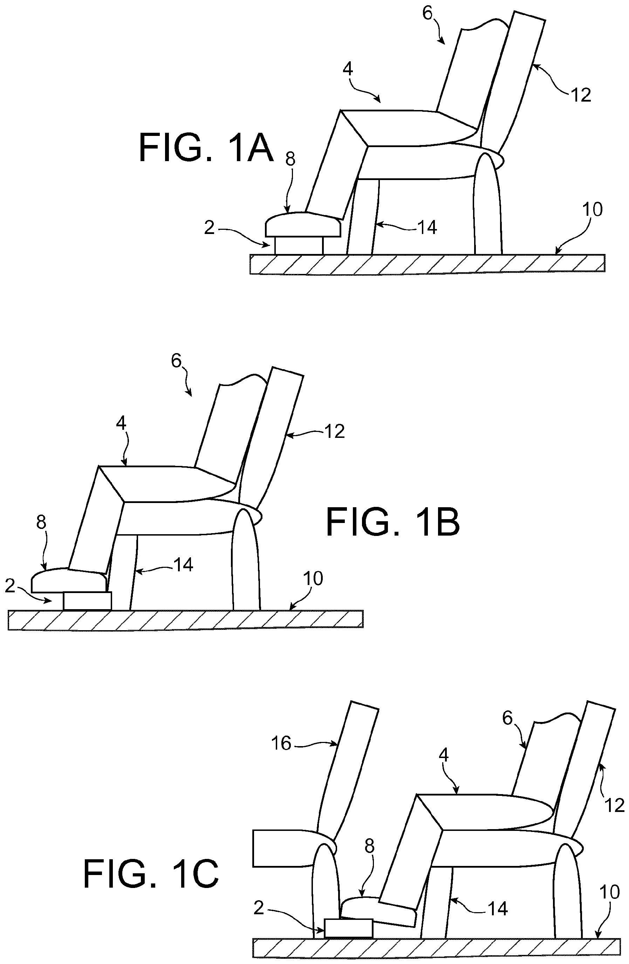

Le système de stimulation 2 est, par exemple, disposé sur un plancher 10 du véhicule, en regard d'une partie basse d'un siège 12 du véhicule destiné à recevoir le passager 6, comme illustré par la figure 1A.

Selon un autre exemple, le système de stimulation 2 est fixé à un élément du siège 12, par exemple un repose-pied 14 du siège 12, comme illustré par la figure 1B. En variante, le système de stimulation 2 est fixé à des parties basses ou des pieds du siège 12 pour tenir lieu de repose-pied pour le siège 12.

Par « partie basse », il est entendu, au sens de la présente invention, la partie du siège se trouvant à une hauteur vis-à-vis du plancher du véhicule inférieure ou égale à un tiers de la hauteur totale du siège.

Selon un autre exemple, le système de stimulation 2 est fixé à un élément d'un siège précédent 16 disposé immédiatement devant le siège 12, de sorte que le système de stimulation 2 soit accessible au passager 6 installé dans le siège 12, comme illustré par la figure 1C.

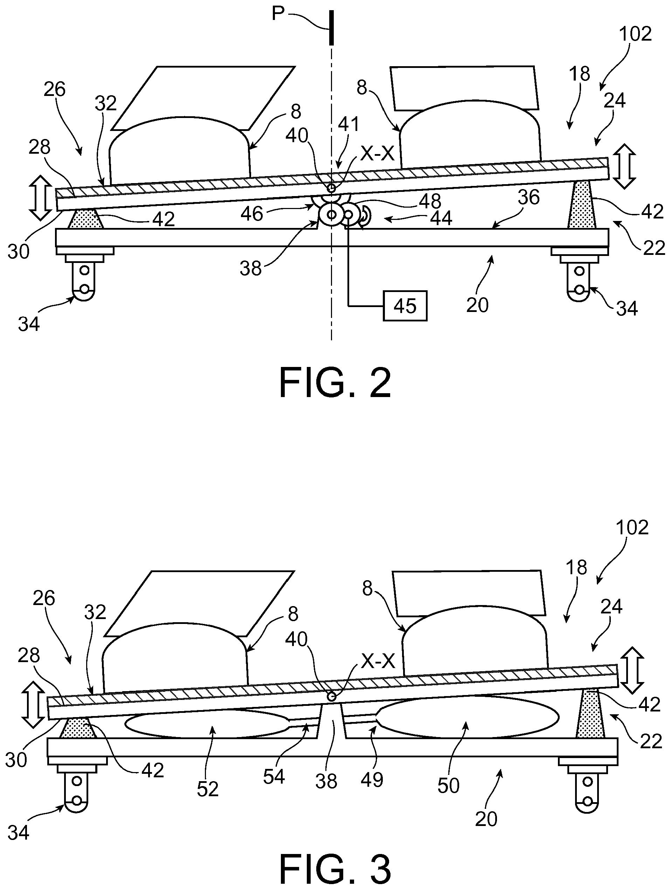

Un premier mode de réalisation du système de stimulation 102 est représenté sur la figure 2.

Le système de stimulation 102 comporte un dispositif d'appui 18, un support 20 et un dispositif d'amortissement22.

Le support 20 est configuré pour solidariser le système de stimulation 102 au véhicule ou à un siège.

Le dispositif d'appui 18 est monté mobile par rapport au support 20, comme cela sera décrit ultérieurement.

Le dispositif d'appui 18 est destiné à recevoir les pieds 8 du passager 6.Le dispositif d'appui 18 est configuré pour se mouvoir par rapport au support 20 sous l'effet d'une force exercée sur le dispositif d'appui 18. En particulier, le dispositif d'appui 18 est configuré pour se mouvoir par rapport au support 20 sous l'effet d'une force exercée sur le dispositif d'appui 18 par le passager 6, notamment au moyen de ses pieds 8.

Le dispositif d'amortissement 22 est configuré pour amortir le déplacement du dispositif d'appui 18.

Par « amortir » le déplacement du dispositif d'appui 18, il est entendu, au sens de la présente invention, générer des efforts de réaction s'opposant au déplacement du dispositif d'appui 18.

Dans le mode de réalisation de la figure 2, Le dispositif d'appui 18 est agencé en regard du support 20.

Le dispositif d'appui 18 adopte, quand non sollicité, une position de référence. La position de référence correspond à la position adoptée par le dispositif d'appui 18 lorsqu'aucune action n'est exercée sur ledit dispositif d'appui 18. Une telle position de référence est, par exemple, une position horizontale du dispositif d'appui 18.

Le dispositif d'appui 18 comporte un premier organe d'appui 24 et un deuxième organe d'appui 26. Chacun parmi le premier organe d'appui 24 et le deuxième organe d'appui 26 est destiné à recevoir un pied 8 distinct du passager 6.

Le premier organe d'appui 24 et le deuxième organe d'appui 26 présentent chacun un axe de rotation correspondant. Les axes de rotation du premier organe d'appui 24 et du deuxième organe d'appui 26 seront décrits ultérieurement.

Le premier organe d'appui 24 et le deuxième organe d'appui 26 sont disposés de part et d'autre d'un plan médian P. Le plan P est un plan non matériel, notamment représenté sur les figures 2, 9 et 10.

Le plan médian P est destiné à se superposer à un plan de symétrie du siège 12 recevant le passager.

Par « plan de symétrie », il est entendu, au sens de la présente invention, un plan général de symétrie, c'est-à-dire un plan orthogonal à la fois à un plan d'assise et à un dossier du siège 12.

Si les axes de rotation du premier organe d'appui 24 et du deuxième organe d'appui 26 sont confondus, le plan médian P est tel que, lorsque le système de stimulation 102 est installé à bord du véhicule, le plan médian P est un plan vertical auquel appartiennent lesdits axes de rotation, comme illustré par la figure 2.

Le premier organe d'appui 24 et le deuxième organe d'appui 26 comportent chacun une face supérieure 28 et une face inférieure 30 orientée à l'opposé de la face supérieure 28.

Chaque face supérieure 28 est destinée à être orientée vers le haut lorsque le système de stimulation 102 est installé à bord du véhicule, de sorte que le passager 6 puisse placer ses pieds 8 sur la face supérieure 28.

La face inférieure 30 est, par exemple, orientée vers le support 20.

De préférence, la face supérieure 28 est munie d'un revêtement antidérapant 32, par exemple collé à la face supérieure 28.

Comme cela apparaît sur la figure 2, le premier organe d'appui 24 et le deuxième organe d'appui 26 sont jointifs pour conférer au dispositif d'appui 18 la forme d'une plaque. Dans ce cas, le premier organe d'appui 24 et le deuxième organe d'appui 26 correspondent aux deux parties de la plaque situées de part et d'autre du plan médian P.

Le support 20 présente, par exemple, la forme d'une plaque rigide ou d'une barre rigide.

Le support 20 comporte des fixations 34 propres à assurer la fixation du système de stimulation 102 au véhicule, par exemple au plancher 10 du véhicule, à un siège 12, ou à un élément d'un siège précédent 16 du véhicule.

Le support 20 comporte une partie supérieure 36 orientée vers la face inférieure 30 du premier organe d'appui 24 et du deuxième organe d'appui 26.

La partie supérieure 36 du support 20 comprend un ergot 38 et une tige 40 coopérant avec le dispositif d'appui 18. Plus précisément, la tige 40 traverse l'ergot 38 et une pièce correspondante du dispositif d'appui 18, la tige 40 s'étendant selon un axe X-X, pour former une liaison pivot 41 d'axe X-X. Dans ce cas, l'axe X-X forme un axe de rotation commun au premier organe d'appui 24 et au deuxième organe d'appui 26, de sorte que le premier organe d'appui 24 et le deuxième organe d'appui 26 sont montés conjointement pivotants par rapport au support 20 autour de l'axe X-X.

L'axe X-X, encore appelé « axe de rotation », forme un angle inférieur ou égal à 45° avec le plan médian P.

Dans cet exemple, l'axe de rotation X-X forme un angle nul avec le plan médian P.

Dans le cas où le support 20 présente la forme d'une plaque, les fixations 34 sont, par exemple, agencées au niveau d'une partie inférieure 42 du support 20, disposée à l'opposé de la partie supérieure 36.

Le dispositif d'amortissement 22 est configuré pour amortir le mouvement du dispositif d'appui 18, c'est-à-dire pour s'opposer à la mise en mouvement du dispositif d'appui 18. Plus précisément, le dispositif d'amortissement 22 est configuré pour exercer des efforts de réaction sur le dispositif d'appui 18, au cours d'un déplacement du dispositif d'appui 18, à l'encontre du déplacement du dispositif d'appui 18.

En outre, le dispositif d'amortissement 22 est, de préférence, configuré pour exercer des efforts de réaction sur le dispositif d'appui 18 à l'encontre d'un écart de la position du dispositif d'appui 18 par rapport à la position de référence, afin de ramener le dispositif d'appui 18 dans la position de référence, lorsque le dispositif d'appui 18 se trouve dans une position distincte de la position de référence correspondante.

Le dispositif d'amortissement 22 comprend, par exemple, au moins un organe de sollicitation élastique 42.

Chaque organe de sollicitation élastique 42 est, par exemple, un ressort ou encore un corps déformable réalisé dans un matériau élastique. Le corps déformable en matériau élastique présente, par exemple, une forme parallélépipédique, cylindrique, ou encore tronconique.

Chaque organe de sollicitation élastique 42 est fixé au dispositif d'appui 18 et/ou au support 20.

Par exemple, comme illustré par la figure 2, le dispositif d'amortissement 22 comprend un premier organe de sollicitation élastique 42, associé au premier organe d'appui 24, et un deuxième organe de sollicitation élastique 42, associé au deuxième organe d'appui 26.

Le premier organe de sollicitation élastique 42 est disposé entre le support 20 et le premier organe d'appui 24, de sorte que, lorsque la face inférieure 30 du premier organe d'appui 24 est rapprochée du support 20, le premier organe de sollicitation élastique 42 est comprimé et exerce un effort de réaction tendant à écarter le premier organe d'appui 24 du support 20 et à ramener le dispositif d'appui 18 vers la position de référence.

En outre, le deuxième organe de sollicitation élastique 42 est disposé entre le support 20 et le deuxième organe d'appui 26, de sorte que, lorsque la face inférieure 30 du deuxième organe d'appui 26 est rapprochée du support 20, le deuxième organe de sollicitation élastique 42 est comprimé et exerce un effort de réaction tendant à écarter le deuxième organe d'appui 26 du support 20 et à ramener le dispositif d'appui 18 vers la position de référence.

Avantageusement, le système de stimulation 102 comporte également un transducteur électromécanique 44 et un afficheur 45.

Le transducteur électromécanique 44 est préférentiellement configuré pour convertir au moins une partie de l'énergie mécanique associée au déplacement du dispositif d'appui 18 en énergie électrique.

En outre, le transducteur électromécanique 44 est configuré pour fournir au moins une partie de l'énergie électrique produite à l'afficheur 45 pour son alimentation.

Avantageusement, le transducteur électromécanique 44 est également configuré pour acheminer au moins une partie de l'énergie électrique produite vers un dispositif de recharge, par exemple un dispositif de recharge d'appareil nomade, tels qu'un téléphone portable, une tablette ou autre.

Comme illustré par la figure 2, le transducteur électromécanique 44 comprend, par exemple, une transmission 46 et une dynamo 48. La transmission 46 est couplée d'une part au dispositif d'appui 18, ou encore à la tige 40, et d'autre part à la dynamo 48 pour entraîner en rotation un arbre de la dynamo 48 lors du déplacement du dispositif d'appui 18 afin de générer un courant électrique.

Le courant électrique généré par la dynamo 48 est, par exemple, stocké après redressement dans un accumulateur du transducteur électromécanique 44.

Dans ce cas, l'afficheur 45 est relié à l'accumulateur.

L'afficheur 45 est configuré pour afficher, à destination du passager 6, des données relatives à l'actionnement du système de stimulation 102, notamment relatives à l'actionnement du système de stimulation 102 par le passager 6. Ces données sont notamment déterminées sur la base du traitement de l'information des fréquences et des amplitudes des signaux fournis par le transducteur électromécanique 44.

Par exemple, l'afficheur 45 comprend au moins une diode électroluminescente. Dans ce cas, l'afficheur 45 est, par exemple, configuré pour allumer chaque diode électroluminescente avec une intensité lumineuse qui est fonction de la cadence d'actionnement du système de stimulation 102 par le passager 6. En variante, dans le cas où l'afficheur 45 comprend une pluralité de diodes électroluminescentes, l'afficheur 45 est configuré pour allumer un nombre de diodes électroluminescentes qui est fonction de la cadence d'actionnement du système de stimulation 102 par le passager 6.

Selon un autre exemple, l'afficheur 45 est un afficheur à cristaux liquides. Dans ce cas, l'afficheur 45 est, par exemple, configuré pour afficher des données numériques telles qu'un comptage de pas, une distance équivalente parcourue, une vitesse, ou encore des données graphiques telles qu'un pictogramme représentatif de l'intensité de l'actionnement du système de stimulation 102 par le passager 6.

Le fonctionnement du système de stimulation 102, tel que représenté sur la figure 2, va maintenant être décrit.

Le système de stimulation 102 est disposé en regard d'une partie basse d'un siège 12 d'un véhicule. En particulier, le support 20 est fixé au véhicule au moyen des fixations 34.

Après s'être installé dans le siège 12, le passager 6 place chacun de ses pieds 8 sur l'organe d'appui correspondant parmi l'organe d'appui 24 et le deuxième organe d'appui 26.

Puis, le passager 6 exerce alternativement, sur chacun parmi le premier organe d'appui 24 et le deuxième organe d'appui 26, une force orientée de la face supérieure 28 vers la face inférieure 30.

Sous l'action de la force exercée par le passager 6, le premier organe d'appui 24 et le deuxième organe d'appui 26 pivotent conjointement autour de l'axe de rotation X-X, alternativement vers la droite puis vers la gauche. Ce mouvement est schématisé, sur la figure 2, par des doubles flèches disposées au niveau d'un bord extérieur de chacun parmi le premier organe d'appui 24 et le deuxième organe d'appui 26.

En réaction, les organes de sollicitation élastiques 42 du dispositif d'amortissement 22 exercent un effort de réaction sur le dispositif d'appui 18 s'opposant à l'action du passager 6.

Ceci a pour effet de stimuler les membres inférieurs 4 du passager 6 en simulant la marche.

L'affichage de données par l'afficheur 45 est susceptible d'inciter le passager 6 à poursuivre l'actionnement du système de stimulation102.

En variante, le dispositif d'amortissement 22 comprend un organe de friction agencé au niveau de la liaison pivot 41. L'organe de friction est configuré pour s'opposer à la mise en mouvement du dispositif d'appui 18. Plus précisément, l'organe de friction est configuré pour exercer des efforts de réaction sur le dispositif d'appui 18,au cours d'un déplacement du dispositif d'appui 18, à l'encontre du déplacement du dispositif d'appui 18.

Selon une variante illustrée par la figure 3, le dispositif d'amortissement 22 comprend, en outre, une enceinte étanche 49. L'enceinte étanche 49 est remplie de fluide.

L'enceinte étanche 49 comprend au moins un premier ballonnet 50, au moins un deuxième ballonnet 52 et au moins un canal de communication fluidique 54.

Le premier ballonnet 50 et le deuxième ballonnet 52 sont chacun réalisés dans un matériau souple.

Le premier ballonnet 50 et le deuxième ballonnet 52 sont en communication par l'intermédiaire du canal de communication fluidique 54, de sorte que le fluide présent dans l'enceinte étanche 49 puisse s'écouler entre le premier ballonnet 50 et le deuxième ballonnet 52 par l'intermédiaire du canal de communication fluidique 54.

Le premier ballonnet 50 est agencé en regard de la face inférieure 30 du premier organe d'appui 24. En particulier, le premier ballonnet 50 est agencé entre le premier organe d'appui 24 et le support 20. En outre, le deuxième ballonnet 52 est agencé en regard de la face inférieure 30 du deuxième organe d'appui 26. En particulier, le deuxième ballonnet 52 est agencé entre le deuxième organe d'appui 26 et le support 20.

Le premier ballonnet 50 et le deuxième ballonnet 52 sont dimensionnés de sorte qu'il existe au moins une position du dispositif d'appui 18 dans laquelle la face inférieure 30 du premier organe d'appui 24, respectivement du deuxième organe d'appui 26, entre en contact avec le premier ballonnet 50, respectivement le deuxième ballonnet 52.

En fonctionnement, lorsque le passager 6 exerce une force sur le premier organe d'appui 24 orientée de la face supérieure 28 vers la face inférieure 30, le premier organe d'appui 24 se déplace et comprime le premier ballonnet 50, entraînant l'écoulement du fluide vers le deuxième ballonnet 52 à travers le canal de communication fluidique 54. Durant l'écoulement du fluide, le premier ballonnet 50 exerce une force de réaction sur le premier organe d'appui 24 qui s'oppose au mouvement du premier organe d'appui 24.

En outre, lorsque le passager 6 exerce une force sur le deuxième organe d'appui 26 orientée de la face supérieure 28 vers la face inférieure 30, le deuxième organe d'appui 26 se déplace et comprime le deuxième ballonnet 52, entraînant l'écoulement du fluide vers le premier ballonnet 50 à travers le canal de communication fluidique 54. Durant l'écoulement du fluide, le deuxième ballonnet 52 exerce une force de réaction sur le deuxième organe d'appui 26 qui s'oppose au mouvement du deuxième organe d'appui 26.

Selon une autre variante, le transducteur électromécanique 44 comporte au moins un élément piézoélectrique 56. Chaque élément piézoélectrique 56 est agencé par rapport au dispositif d'appui 18 de façon à subir une déformation lors de la mise en mouvement du dispositif d'appui 18.

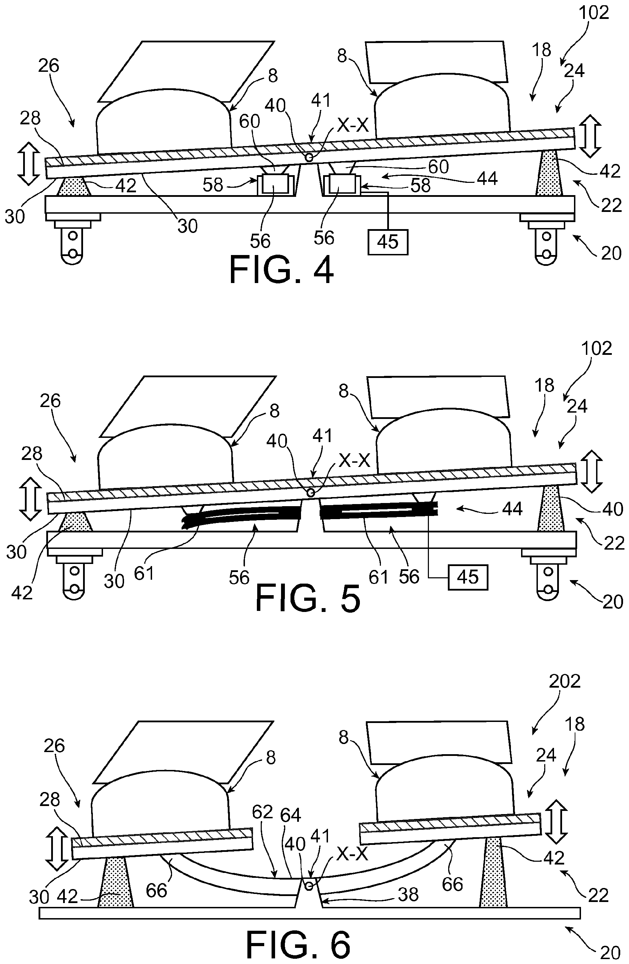

Par exemple, selon une variante illustrée par la figure 4, les éléments piézoélectriques 56 sont des cales piézoélectriques propres à générer une tension en mode compression. Les cales piézoélectriques sont, par exemple, des cales monomorphes ou un empilement de cales monomorphes.

Les cales piézoélectriques sont agencées en regard de la face inférieure 30 du premier organe d'appui 24 et du deuxième organe d'appui 26, de façon à subir une déformation lors de la mise en mouvement du dispositif d'appui 18.

Les cales piézoélectriques sont, par exemple, agencées dans un boîtier rigide 58. Le boîtier rigide 58 est réalisé dans un matériau électriquement isolant. Le boîtier rigide 58 est monté fixe par rapport au dispositif d'appui 18. En outre, le transducteur électromécanique 44 comprend des plots semi-rigides 60 solidaires du dispositif d'appui 18 et configurés pour solliciter les cales piézoélectriques en compression lors du mouvement du dispositif d'appui 18, avec effet de levier.

En fonctionnement le mouvement du dispositif d'appui 18 entraîne une déformation en compression des cales piézoélectriques. Une tension électrique apparaît aux bornes des cales piézoélectriques. Ladite tension est susceptible, une fois redressée, par exemple au moyen de diodes et d'un régulateur, d'entraîner la recharge d'un élément accumulateur, tel qu'un accumulateur ou une supercapacité, par exemple pour alimenter l'afficheur 45 en énergie électrique.

Selon une autre variante, illustrée par la figure 5, les éléments piézoélectriques 56 forment des lames piézoélectriques propres à générer une tension en mode flexion.

Les lames piézoélectriques sont, par exemple, des lames céramiques bimorphes, des films polymères piézoélectriques, ou encore des composants piézoélectriques composites montés sur des lames flexibles 61.

Les lames piézoélectriques sont montées de façon à subir une déformation lors de la mise en mouvement du dispositif d'appui 18. Par exemple, les lames piézoélectriques sont montées fixes par rapport au support 20, en s'étendant entre le dispositif d'appui 18 et le support 20, pour subir une déformation en flexion lors du mouvement du dispositif d'appui 18.

En fonctionnement, le mouvement du dispositif d'appui 18 entraîne une déformation en flexion des lames piézoélectriques. Une tension électrique apparaît aux bornes des lames piézoélectriques. Ladite tension est susceptible, une fois redressée, d'entraîner la recharge de l'élément accumulateur, par exemple pour alimenter l'afficheur 45 en énergie électrique.

Un système de stimulation 202 selon un deuxième mode de réalisation de l'invention est illustré par la figure 6.

Le système de stimulation 202 diffère du système de stimulation 102 en ce que le premier organe d'appui 24 et le deuxième organe d'appui 26 ne sont pas jointifs.

Dans ce cas, le premier organe d'appui 24 et le deuxième organe d'appui 26 sont chacun reliés à une extrémité d'une barre 62 présentant une forme en arc.

La barre 62 coopère avec l'ergot 38 du support 20 au niveau d'une partie centrale 64 de la barre 62, les extrémités de la barre 62 étant orientées à l'opposé du support 20.

Par exemple, chacun parmi le premier organe d'appui 24 et le deuxième organe d'appui 26 comporte une rotule 66. Dans ce cas, chacun parmi le premier organe d'appui 24 et le deuxième organe d'appui 26 est relié à l'extrémité correspondante de la barre 62 au moyen de la rotule 66.

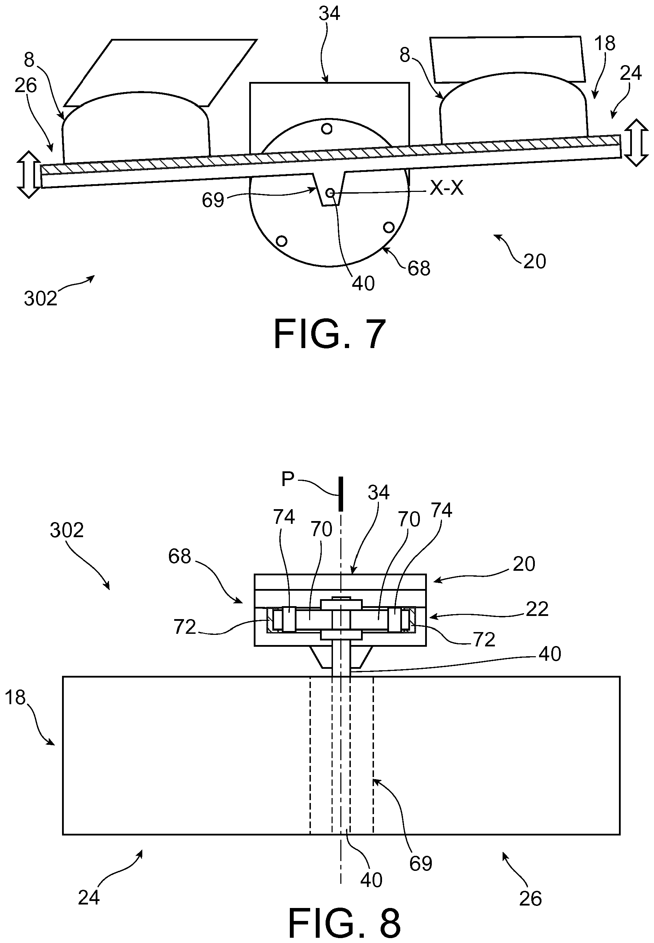

Un système de stimulation 302 selon un troisième mode de réalisation de l'invention est illustré par les figures 7 et 8.

Le système de stimulation 302 se distingue du système de stimulation 102 en ce que le support 20 est agencé latéralement par rapport au dispositif d'appui 18.

Dans ce cas, le dispositif d'appui 18 comporte un plot 69 faisant saillie par rapport à la face inférieure 30 du premier organe d'appui 24 et du deuxième organe d'appui 26.

En outre, le support 20 comprend un boîtier support 68.

Le boîtier support 68 est, de préférence, destiné à être fixé à un élément du siège 12, ou encore un élément du siège 16 disposé immédiatement devant le siège 12.

La tige 40 du support 20 est fixée, par l'une de ses extrémités, au plot 69 du dispositif d'appui 18.

En outre, l'autre extrémité de la tige 40 est engagée dans le boîtier support 68, de sorte que la tige 40 est montée pivotante par rapport au boîtier support 68.

Le dispositif d'amortissement 22 est logé dans le boîtier support 68. Plus précisément, le dispositif d'amortissement 22 coopère avec l'extrémité de la tige engagée dans le boîtier support 68 pour s'opposer à la rotation de la tige 40 autour de son axe X-X et au mouvement du dispositif d'appui 18.

Avantageusement, le dispositif d'amortissement 22 est également configuré pour ramener le dispositif d'appui 18 dans la position de référence correspondante en cas d'écart de la position du dispositif d'appui 18 par rapport à ladite disposition de référence.

Le dispositif d'amortissement 22 comporte, par exemple, des lames ressorts 70 fixées sur la tige 40 et s'étendant radialement par rapport à la tige 40. Le dispositif d'amortissement 22 comporte, en outre, des butées 72 solidaires du boîtier support 68.

Chaque lame ressort 70 est au contact, par son extrémité libre, d'une butée 72 correspondante.

En fonctionnement, lors de la rotation du dispositif d'appui 18 autour de l'axe X-X de la tige 40, les lames ressorts 70 se déforment et exercent, sur les butées 72 correspondantes, un effort de réaction s'opposant au mouvement du dispositif d'appui 18 et tendant à ramener le dispositif d'appui 18 vers sa position de référence.

Avantageusement, un corps déformable est agencé sur chaque lame ressort 70. Chaque corps déformable a pour fonction de produire un amortissement de la lame ressort 70 correspondante par la compression dudit corps déformable. Chaque corps déformable est configuré pour entrer en contact, avant les lames ressorts 70, avec les butées 72 correspondantes, pour amortir le retour en position de butée.

En variante, le dispositif d'amortissement 22 est uniquement configuré pour s'opposer au mouvement du dispositif d'appui. Par exemple, le dispositif d'amortissement 22 est formé par un organe de friction configuré pour coopérer avec l'extrémité de la tige 40 engagée dans le boîtier support 68 afin de générer des efforts de réaction s'opposant à un moment du dispositif d'appui 18.

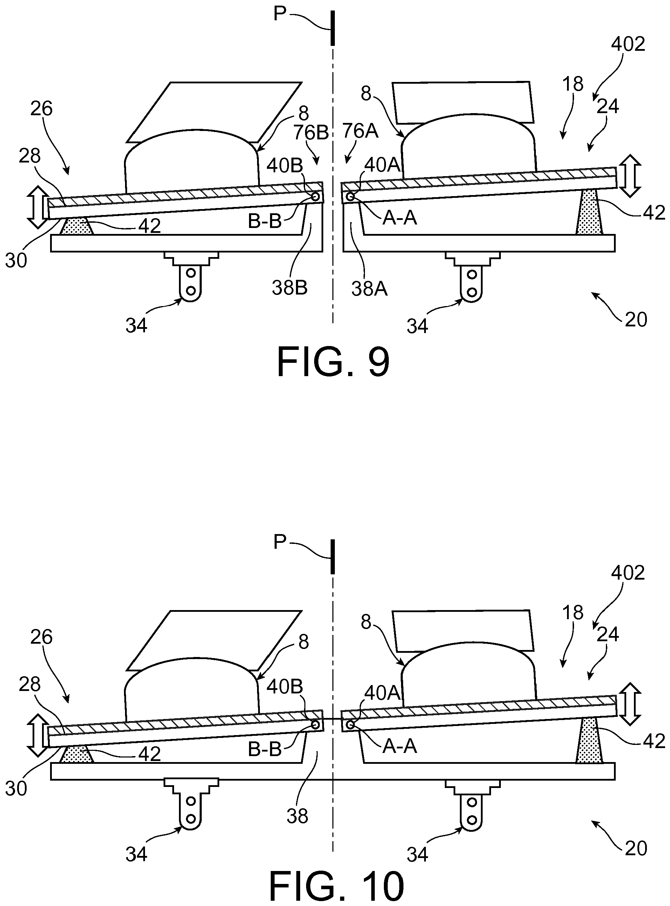

Un système de stimulation 402 selon un quatrième mode de réalisation de l'invention est illustré par la figure 9.

Le système de stimulation 402 se distingue du système de stimulation 102 en ce que le premier organe d'appui 24 et le deuxième organe d'appui 26 sont disjoints et en ce que l'axe de rotation du premier organe d'appui 24 et l'axe de rotation du deuxième organe d'appui 26 ne sont pas confondus.

Comme cela apparaît sur la figure 9, le support 20 comporte également deux parties disjointes comprenant respectivement un premier ergot 38A et un deuxième ergot 38B.

Le premier organe d'appui 24 est relié, par un bord interne 76A, à l'ergot 38A au moyen d'une tige 40A pour former une liaison pivot. La tige 40A s'étend selon un axe de rotation A-A.

Le bord interne 76A du premier organe d'appui 24 est le bord du premier organe d'appui 24 le plus proche du plan médian P.

Le deuxième organe d'appui 26 est relié, par un bord interne 76B, à l'ergot 38B au moyen d'une tige 40B pour former une liaison pivot. La tige 40B s'étend selon un axe de rotation B-B.

Le bord interne 76B du deuxième organe d'appui 26 est le bord du deuxième organe d'appui 26 le plus proche du plan médian P.

Dans ce cas, le premier organe 24 et le deuxième organe d'appui 26 sont susceptibles d'être mis en mouvement séparément.

Dans ce cas, le dispositif d'amortissement 22 est, avantageusement, configuré pour ramener au moins l'un du premier organe 24 et du deuxième organe d'appui 26 vers une position de référence correspondante, lorsque la position du premier organe 24 et/ou du deuxième organe d'appui 26 se trouve dans une position distincte de la position de référence correspondante.

Le plan médian P est tel que, lorsque le système de stimulation 402 est monté à bord du véhicule, le plan médian P est un plan vertical s'étendant entre l'axe de rotation A-A et l'axe de rotation B-B.

Chacun parmi l'axe de rotation A-A et l'axe de rotation B-B forme, avec le plan médian P, un angle inférieur ou égal à 45°.

Dans cet exemple, chacun de l'axe de rotation A-A et l'axe de rotation B-B forme un angle nul avec le plan médian P.

En variante, comme illustré par la figure 10, l'ergot 38A et l'ergot 38B sont jointifs en un ergot 38. Dans ce cas, chacun parmi le premier organe d'appui 24 et le deuxième organe d'appui 26 est relié à l'ergot 38 par une tige 40A, 40B dédiée.

En fonctionnement, le passager 6 actionne alternativement le premier organe d'appui 24 et le deuxième organe d'appui 26 pour de simuler la marche, afin de stimuler ses membres inférieurs 4.

Le premier organe d'appui 24 et le deuxième organe 26 étant susceptibles d'être mis en mouvement séparément, la simulation de la marche est davantage adaptée à la foulée de chaque passager 6.

En variante, l'ergot 38A est situé au niveau d'un bord externe du premier organe d'appui 24, et/ou l'ergot 38B est situé au niveau d'un bord externe du deuxième organe d'appui 26.

Le bord externe du premier organe d'appui 24, respectivement du deuxième organe d'appui 26, est le bord du premier organe d'appui 24, respectivement du deuxième organe d'appui 26, le plus éloigné du plan médian P.

Dans ce cas, le premier organe d'appui 24 est relié à l'ergot 38A par son bord externe, au moyen de la tige 40A, et/ou le deuxième organe d'appui 26 est relié à l'ergot 38B par son bord externe, au moyen d'une tige 40B.

Bien que dans les exemples décrits ci-dessus, l'axe de rotation forme avec le plan médian P un angle sensiblement nul, il n'est pas exclu que l'angle entre chaque axe de rotation et le plan médian P présente une valeur quelconque entre 0° et 45°, avantageusement une valeur quelconque entre 0° et 35°, de préférence une valeur quelconque entre 0° et 25°, par exemple une valeur quelconque entre 0° et 15°, ou encore une valeur quelconque entre 0° et 5°.

Dans les exemples décrits ci-dessus, il ressort clairement que, dans le cas où le premier organe d'appui 24 et le deuxième organe d'appui 26 sont solidaires l'un de l'autre, l'axe X-X constitue un unique axe de rotation du premier organe d'appui 24 et du deuxième organe d'appui 26. En outre, dans le cas où le premier organe d'appui 24 et le deuxième organe d'appui 26 ne sont pas solidaires l'un de l'autre, l'axe A-A constitue un unique axe de rotation du premier organe d'appui 24, et l'axe B-B constitue un unique axe de rotation du deuxième organe d'appui 26.

Le système de stimulation selon l'invention présente un encombrement réduit. Le système de stimulation selon l'invention est même susceptible de se substituer à des systèmes repose-pied fixes usuellement installés sur certains modèles de sièges, tout en favorisant la conservation d'un espace de dégagement entre les sièges. Suivant les configurations et les opportunités d'intégration, le système est soit placé sous les pointes de pieds en conservant un appui des talons au sol, ou soit sous les talons en conservant un appui des pointes de pieds au sol ou également sous la totalité du pied. De plus, il est proposé d'associer au système un transducteur électromécanique qui, par l'exploitation des mouvements réalisés avec le dispositif, est susceptible de générer de l'énergie électrique, et une mesure de la cadence et de l'intensité du mouvement, pour le pilotage d'un indicateur lumineux, d'un terminal ou la recharge d'un produit nomade. Ceci a pour effet de créer un agrément supplémentaire à l'activation du système de stimulation selon l'invention.

En outre, un tel système de stimulation selon l'invention est susceptible d'être intégré à la place usuelle de repose-pieds fixes existants déjà sur certains sièges.

## Revendications

1. Siège (12) de véhicule destiné à recevoir un passager (6), équipé d'un système de stimulation (2) des membres inférieurs (4) du passager (6) d'un véhicule, le système de stimulation (2) comportant un support (20) et un dispositif d'appui (18),
le dispositif d'appui (18) comprenant un premier organe d'appui (24) et un deuxième organe d'appui (26),
le premier organe d'appui (24) et le deuxième organe d'appui (26) étant disposés de part et d'autre d'un plan médian (P), le plan médian (P) étant destiné à se superposer à un plan de symétrie du siège (12), chacun parmi le premier organe d'appui (24) et le deuxième organe d'appui (26) étant destiné à recevoir au moins en partie un pied (8) du passager (6),
chacun du premier organe d'appui (24) et du deuxième organe d'appui (26) étant monté pivotant, par rapport au support (20), autour d'un axe de rotation (X-X ; A-A, B-B) correspondant,
le système de stimulation (2) comportant, en outre, un dispositif (22) d'amortissement du mouvement d'au moins un parmi le premier organe d'appui (24) et le deuxième organe d'appui (26) par rapport au support (20),
le système de stimulation (2) étant fixé à un repose-pied (14) du siège (12), à des parties basses du siège (12) ou à des pieds du siège (12),
le système de stimulation (2) étant destiné à être actionné par le passager (6) lorsque le passager (6) se trouve en position assise sur le siège (12), **caractérisé en ce que** chaque axe de rotation (X-X, A-A, B-B) forment avec le plan médian un angle inférieur ou égal a 45°.

2. Siège (12) selon la revendication 1, dans lequel l'axe de rotation (X-X ; A-A, B-B) associé au premier organe d'appui (24) et l'axe de rotation (X-X ; A-A, B-B) associé au deuxième organe d'appui (26) sont confondus.

3. Siège (12) selon la revendication 1 ou la revendication 2, dans lequel le premier organe d'appui (24) et le deuxième organe d'appui (26) sont solidaires l'un de l'autre.

4. Siège (12) selon la revendication 1, dans lequel l'axe de rotation (A-A) associé au premier organe d'appui (24) et l'axe de rotation (B-B) associé au deuxième organe d'appui (26) sont distincts, chacun parmi le premier organe d'appui (24) et le deuxième organe d'appui (26) étant susceptible d'être mis en mouvement de façon indépendante autour de l'axe de rotation (A-A, B-B) correspondant, le dispositif d'amortissement (22) étant en outre configuré pour ramener le premier organe d'appui (24) et/ou le deuxième organe d'appui (26) vers une position de référence correspondante.

5. Siège (12) selon l'une quelconque des revendications 1 à 4, comportant, en outre, au moins un transducteur électromécanique (44) propre à convertir au moins une partie de l'énergie mécanique associée au déplacement de l'au moins un parmi le premier organe d'appui (24) et le deuxième organe d'appui (26) en une énergie électrique.

6. Siège (12) selon la revendication 5, comportant, en outre, un afficheur (45), l'afficheur (45) étant configuré pour afficher des données relatives à l'actionnement du système de stimulation (2), l'afficheur (45) étant préférentiellement alimenté par le transducteur électromécanique (44), les données relatives à l'actionnement du système de stimulation (2) étant, de préférence, issues d'un signal électrique généré par le transducteur électromécanique (44).

7. Siège (12) selon la revendication 5 ou 6, comportant, en outre, une prise de recharge pour appareil nomade, la prise étant alimentée en énergie électrique par le transducteur électromécanique (44), au travers d'un organe électronique intégrant des fonctions de redressement de courant électrique, de régulation de courant électrique et, de préférence, de protection électrique.

8. Siège (12) selon l'une quelconque des revendications 1 à 7, dans lequel le dispositif d'amortissement (22) comporte des organes de sollicitation élastiques (42) configurés pour engendrer des efforts de réaction lors de l'écart du premier organe d'appui (24) et/ou du deuxième organe d'appui (26) d'une position de référence correspondante afin de ramener le premier organe d'appui (24) et/ou le deuxième organe d'appui (26) vers la position de référence.

9. Siège (12) selon l'une quelconque des revendications 1 à 8, dans lequel le dispositif d'amortissement (22) comporte un premier ballonnet (50) et un deuxième ballonnet (52), le premier ballonnet (50) étant agencé en regard d'une face inférieure (30) du premier organe d'appui (24) pour être comprimé lors d'un déplacement du premier organe d'appui (24) vers le premier ballonnet (50), et le deuxième ballonnet (52) étant agencé en regard d'une face inférieure (30) du deuxième organe d'appui (26) pour être comprimé lors d'un déplacement du deuxième organe d'appui (26) vers le deuxième ballonnet (52), le premier ballonnet (50) et le deuxième ballonnet (52) étant relié entre eux par un canal de communication fluidique (54) pour former une enceinte étanche (49) remplie de fluide.

10. Siège (12) selon l'une quelconque des revendications 1 à 9, dans lequel chaque axe de rotation (X-X; A-A, B-B) forme un angle nul avec le plan médian (P).

11. Véhicule comprenant au moins un siège (12) selon l'une quelconque des revendications 1 à 9

12. Véhicule comprenant au moins un système de stimulation (2) des membres inférieurs (4) d'un passager (6) du véhicule,
le système de stimulation (2) comportant un support (20) et un dispositif d'appui (18),
le dispositif d'appui (18) comprenant un premier organe d'appui (24) et un deuxième organe d'appui (26),
le premier organe d'appui (24) et le deuxième organe d'appui (26) étant disposés de part et d'autre d'un plan médian (P), le plan médian (P) étant destiné à se superposer à un plan de symétrie d'un siège (12) propre à recevoir le passager (6), chacun parmi le premier organe d'appui (24) et le deuxième organe d'appui (26) étant destiné à recevoir au moins en partie un pied (8) du passager (6),
chacun du premier organe d'appui (24) et du deuxième organe d'appui (26) étant monté pivotant, par rapport au support (20), autour d'un axe de rotation (X-X ; A-A, B-B) correspondant,
chaque système de stimulation (2) comportant, en outre, un dispositif (22) d'amortissement du mouvement d'au moins un parmi le premier organe d'appui (24) et le deuxième organe d'appui (26) par rapport au support (20),
chaque système de stimulation (2) étant fixé à un plancher (10) du véhicule, en regard d'une partie basse d'un siège (12) correspondant,
chaque système de stimulation (2) étant destiné à être actionné par un passager (6) lorsque le passager (6) se trouve en position assise sur le siège (12) correspondant,
**caractérisé en ce que** chaque axe de rotation (X-X, A-A, B-B) forment avec le plan médian un angle inférieur ou égal a 45°.

## Patentansprüche

1. Fahrzeugsitz (12), der dazu bestimmt ist, einen Fahrgast (6) aufzunehmen, und mit einem Stimulationssystem (2) für die unteren Gliedmaßen (4) des Fahrgastes (6) eines Fahrzeugs ausgestattet ist, wobei das Stimulationssystem (2) einen Träger (20) und eine Abstützvorrichtung (18) aufweist,
wobei die Abstützvorrichtung (18) ein erstes Abstützelement (24) und ein zweites Abstützelement (26) aufweist,
wobei das erste Abstützelement (24) und das zweite Abstützelement (26) beiderseits einer Mittelebene (P) angeordnet sind, wobei die Mittelebene (P) dazu bestimmt ist, einer Symmetrieebene des Sitzes (12) überlagert zu werden, wobei sowohl das erste Abstützelement (24) als auch das zweite Abstützelement (26) dazu bestimmt sind, zumindest teilweise einen Fuß (8) des Fahrgastes (6) aufzunehmen,
wobei sowohl das erste Abstützelement (24) als auch das zweite Abstützelement (26) in Bezug auf den Träger (20) um eine entsprechende Drehachse (X-X; A-A, B-B) schwenkbar gelagert sind,
wobei das Stimulationssystem (2) ferner eine Vorrichtung (22) zur Dämpfung der Bewegung zumindest eines aus erstem Abstützelement (24) und zweitem Abstützelement (26) relativ zum Träger (20) enthält,
wobei das Stimulationssystem (2) an einer Fußstütze (14) des Sitzes (12), an unteren Abschnitten des Sitzes (12) oder an den Füßen des Sitzes (12) befestigt ist,
wobei das Stimulierungssystem (2) dazu bestimmt ist, von dem Fahrgast (6) betätigt zu werden, wenn sich der Fahrgast (6) in einer Sitzposition auf dem Sitz (12) befindet,
**dadurch gekennzeichnet, dass**
jede Drehachse (X-X; A-A, B-B) mit der Mittelebene (P) einen Winkel kleiner oder gleich 45° einschließt.

2. Sitz (12) nach Anspruch 1, wobei die dem ersten Abstützelement (24) zugeordnete Drehachse (X-X; A-A, B-B) und die dem zweiten Abstützelement (26) zugeordnete Drehachse (X-X; A-A, B-B) zusammenfallen.

3. Sitz (12) nach Anspruch 1 oder Anspruch 2, wobei das erste Abstützelement (24) und das zweite Abstützelement (26) fest miteinander verbunden sind.

4. Sitz (12) nach Anspruch 1, wobei die dem ersten Abstützelement (24) zugeordnete Drehachse (A-A) und die dem zweiten Abstützelement (26) zugeordnete Drehachse (B-B) unterschiedlich sind, wobei sowohl das erste Abstützelement (24) als auch das zweite Abstützelement (26) unabhängig voneinander um die entsprechende Drehachse (A-A, B-B) in Bewegung gesetzt werden können, wobei die Dämpfungsvorrichtung (22) ferner dazu ausgelegt ist, das erste Abstützelement (24) und/oder das zweite Abstützelement (26) in eine entsprechende Referenzposition zurückzuführen.

5. Sitz (12) nach einem der Ansprüche 1 bis 4, ferner enthaltend zumindest einen elektromechanischen Wandler (44), der dazu geeignet ist, zumindest einen Teil der mechanischen Energie, die mit der Verlagerung von zumindest einem aus erstem Abstützelement (24) und zweitem Abstützelement (26) zusammenhängt, in elektrische Energie umzuwandeln.

6. Sitz (12) nach Anspruch 5, ferner enthaltend eine Anzeige (45), wobei die Anzeige (45) dazu ausgelegt ist, Daten anzuzeigen, die sich auf die Betätigung des Stimulationssystems (2) beziehen, wobei die Anzeige (45) vorzugsweise von dem elektromechanischen Wandler (44) gespeist wird, wobei die Daten, die sich auf die Betätigung des Stimulationssystems (2) beziehen, vorzugsweise von einem elektrischen Signal stammen, das von dem elektromechanischen Wandler (44) erzeugt wird.

7. Sitz (12) nach Anspruch 5 oder 6, ferner enthaltend eine Ladebuchse für ein mobiles Gerät, wobei die Buchse durch den elektromechanischen Wandler (44) über ein elektronisches Element, das Funktionen zum Gleichrichten von elektrischem Strom, Regeln von elektrischem Strom und vorzugsweise zum elektrischen Schutz integriert, mit elektrischer Energie versorgt wird.

8. Sitz (12) nach einem der Ansprüche 1 bis 7,
wobei die Dämpfungsvorrichtung (22) elastische Vorspannelemente (42) enthält, die dazu ausgelegt sind, Reaktionskräfte zu erzeugen, wenn das erste Abstützelement (24) und/oder das zweite Abstützelement (26) von einer entsprechenden Referenzposition beabstandet ist/sind, um das erste Abstützelement (24) und/oder das zweite Abstützelement (26) in die Referenzposition zurückzuführen.

9. Sitz (12) nach einem der Ansprüche 1 bis 8,
wobei die Dämpfungsvorrichtung (22) einen ersten Ballon (50) und einen zweiten Ballon (52) aufweist, wobei der erste Ballon (50) einer Unterseite (30) des ersten Abstützelements (24) gegenüberliegend angeordnet ist, um bei einer Verlagerung des ersten Abstützelements (24) in Richtung des ersten Ballons (50) zusammengedrückt zu werden, und wobei der zweite Ballon (52) einer Unterseite (30) des zweiten Abstützelements (26) gegenüberliegend angeordnet ist, um bei einer Verlagerung des zweiten Abstützelements (26) in Richtung des zweiten Ballons (52) zusammengedrückt zu werden, wobei der erste Ballon (50) und der zweite Ballon (52) durch einen Strömungsverbindungskanal (54) miteinander verbunden sind, um ein abgedichtetes, fluidgefülltes Gehäuse (49) zu bilden.

10. Sitz (12) nach einem der Ansprüche 1 bis 9,
wobei jede Drehachse (X-X; A-A, B-B) einen Nullwinkel mit der Mittelebene (P) bildet.

11. Fahrzeug mit mindestens einem Sitz (12) nach einem der Ansprüche 1 bis 9.

12. Fahrzeug mit mindestens einem Stimulationssystem (2) für die unteren Gliedmaßen (4) eines Fahrgastes (6) des Fahrzeugs,
wobei das Stimulationssystem (2) einen Träger (20) und eine Abstützvorrichtung (18) enthält,
wobei die Abstützvorrichtung (18) ein erstes Abstützelement (24) und ein zweites Abstützelement (26) aufweist,
wobei das erste Abstützelement (24) und das zweite Abstützelement (26) beiderseits einer Mittelebene (P) angeordnet sind, wobei die Mittelebene (P) dazu bestimmt ist, eine Symmetrieebene eines Sitzes (12) zu überlagern, der geeignet ist, den Fahrgast (6) aufzunehmen, wobei sowohl das erste Abstützelement (24) als auch das zweite Abstützelement (26) dazu bestimmt sind, zumindest teilweise einen Fuß (8) des Fahrgastes (6) aufzunehmen, wobei sowohl das erste Abstützelement (24) als auch das zweite Abstützelement (26) in Bezug auf den Träger (20) um eine entsprechende Drehachse (X-X; A-A, B-B) schwenkbar gelagert sind,
wobei jedes Stimulationssystem (2) ferner eine Vorrichtung (22) zur Dämpfung der Bewegung von mindestens einem aus erstem Abstützelement (24) und zweitem Abstützelement (26) relativ zum Träger (20) enthält,
wobei jedes Stimulationssystem (2) an einen Boden (10) des Fahrzeugs einem unteren Abschnitt eines entsprechenden Sitzes (12) gegenüberliegend befestigt ist,
wobei jedes Stimulationssystem (2) dazu bestimmt ist, von einem Fahrgast (6) betätigt zu werden, wenn sich der Fahrgast (6) in einer Sitzposition auf dem entsprechenden Sitz (12) befindet,
**dadurch gekennzeichnet, dass**
jede Drehachse (X-X; A-A, B-B) mit der Mittelebene (P) einen Winkel kleiner oder gleich 45° einschließt.

## Claims

1. A vehicle seat (12) intended to receive a passenger (6), equipped with a system (2) for stimulating the lower limbs (4) of the passenger (6) of a vehicle, the stimulation system (2) including a support (20) and a bearing device (18),
the bearing device (18) comprising a first bearing member (24) and a second bearing member (26),
the first bearing member (24) and the second bearing member (26) being disposed on either side of a midplane (P), the midplane (P) being intended to be superimposed to a plane of symmetry of the seat (12), each amongst the first bearing member (24) and the second bearing member (26) being intended to receive at least partially a foot (8) of the passenger (6),
each of the first bearing member (24) and the second bearing member (26) being pivotally mounted, relative to the support (20), about a corresponding axis of rotation (X-X; A-A, B-B),
the stimulation system (2) further including a device (22) for damping the movement of at least one amongst the first bearing member (24) and the second bearing member (26) relative to the support (20),
the stimulation system (2) being fastened to a footrest (14) of the seat (12), to bottom portions of the seat (12) or to feet of the seat (12),
the stimulation system (2) being intended to be actuated by the passenger (6) when the passenger (6) is sitting on the seat (12),
**characterised in that** each axis of rotation (X-X, A-A, B-B) forming an angle smaller than or equal to 45° with the midplane.

2. The seat (12) according to claim 1, wherein the axis of rotation (X-X; A-A, B-B) associated to the first bearing member (24) and the axis of rotation (X-X; A-A, B-B) associated to the second bearing member (26) are coincident.

3. The seat (12) according to claim 1 or claim 2, wherein the first bearing member (24) and the second bearing member (26) are secured to each other.

4. The seat (12) according to claim 1, wherein the axis of rotation (A-A) associated to the first bearing member (24) and the axis of rotation (B-B) associated to the second bearing member (26) are distinct, each amongst the first bearing member (24) and the second bearing member (26) being prone to be moved independently about the corresponding axis of rotation (A-A, B-B), the damping device (22) being further configured to bring the first bearing member (24) and/or the second bearing member (26) back towards a corresponding reference position.

5. The seat (12) according to any one of claims 1 to 4, further including at least one electromechanical transducer (44) adapted to convert at least one portion of the mechanical energy associated to the movement of the at least one amongst the first bearing member (24) and the second bearing member (26) into an electrical energy.

6. The seat (12) according to claim 5, further including a display (45), the display (45) being configured so as to display data relating to the actuation of the stimulation system (2), the display (45) being preferably powered by the electromechanical transducer (44), the data relating to the actuation of the stimulation system (2) being preferably derived from an electrical signal generated by the electromechanical transducer (44).

7. The seat (12) according to claim 5 or 6, further including a charging socket for a portable apparatus, the socket being powered with electrical energy by the electromechanical transducer (44), throughout an electronic member integrating electric current rectification, electric current regulation and, preferably, electrical protection functions.

8. The seat (12) according to any one of claims 1 to 7, wherein the damping device (22) includes elastic biasing members (42) configured so as to generate reaction forces upon moving the first bearing member (24) and/or the second bearing member (26) away from a corresponding reference position in order to bring the first bearing member (24) and/or the second bearing member (26) towards the reference position.

9. The seat (12) according to any one of claims 1 to 8, wherein the damping device (22) includes a first balloon (50) and a second balloon (52), the first balloon (50) being arranged opposite a lower face (30) of the first bearing member (24) so as to be compressed upon a movement of the first bearing member (24) towards the first balloon (50), and the second balloon (52) being arranged opposite a lower face (30) of the second bearing member (26) so as to be compressed upon a movement of the second bearing member (26) towards the second balloon (52), the first balloon (50) and the second balloon (52) being connected to one another by a fluidic communication channel (54) so as to form a tight enclosure (49) filled with a fluid.

10. The seat (12) according to any one of claims 1 to 9, wherein each axis of rotation (X-X; A-A, B-B) forms a zero angle with the midplane (P).

11. A vehicle comprising at least one seat (12) according to any one of claims 1 to 9.

12. A vehicle comprising at least one system (2) for stimulating the lower limbs (4) of a passenger (6) of the vehicle,
the stimulation system (2) including a support (20) and a bearing device (18),
the bearing device (18) comprising a first bearing member (24) and a second bearing member (26),
the first bearing member (24) and the second bearing member (26) being disposed on either side of a midplane (P), the midplane (P) being intended to be superimposed to a plane of symmetry of the seat (12) adapted to receive the passenger (6), each amongst the first bearing member (24) and the second bearing member (26) being intended to receive at least partially a foot (8) of the passenger (6),
each of the first bearing member (24) and the second bearing member (26) being pivotally mounted, relative to the support (20), about a corresponding axis of rotation (X-X; A-A, B-B),
each stimulation system (2) further including a device (22) for damping the movement of at least one amongst the first bearing member (24) and the second bearing member (26) relative to the support (20),
each stimulation system (2) being fastened to a floor (10) of the vehicle, opposite a bottom portion of a corresponding seat (12),
each stimulation system (2) being intended to be actuated by the passenger (6) when the passenger (6) is sitting on the corresponding seat (12),
**characterised in that** each axis of rotation (X-X, A-A, B-B) forming an angle smaller than or equal to 45° with the midplane.
